# EUROPEAN PATENT SPECIFICATION

(11) **EP 2 097 254 B1**
(45) Date of publication and mention of the grant of the patent: **05.10.2011**
(21) Application number: 06841035.6
(22) Date of filing: 19.12.2006
(51) Int. Cl.: B32B 15/01, F16C 33/12, F16C 33/14, C22C 13/00

(54) **SLIDING BEARING**
GLEITLAGER
PALIER COULISSANT

(43) Date of publication of application: 09.09.2009
(73) Proprietor: Mahle International GmbH, 70372 Stuttgart (DE)
(72) Inventor: KNOBLAUCH, Christiane, 70619 Stuttgart (DE); SARABANDA, Jose Valentim Lima, Sao Paulo, SP (BR)
(74) Representative: Pohle, Reinhard
(86) International application number: PCT/EP2006/012229
(87) International publication number: WO 2008/074344

(56) References cited:
- EP-A1- 1 157 820
- EP-A1- 1 586 679
- WO-A-2005/015037
- DE-A1- 19 852 481
- DE-A1-102005 063 325
- DE-C1- 4 443 461
- DE-C1- 10 026 680
- GB-A- 2 313 163
- GB-A- 2 321 468
- GB-A- 2 350 868
- US-A1- 2004 177 902

## Description

### Field of invention

The present invention refers to a sliding bearing comprising a back metal layer, a bearing layer applied to the back metal layer, at least one intermediate layer applied to the bearing layer and an overlay applied to the at least one intermediate layer.

### Background art

Sliding bearings manufactured as lead free composite multilayer bearings are demanded for launching of new engines, especially for medium to heavy duty engine applications. This demand goes worldwide as it is difficult to consider the development of world platforms with variations of internal components for captive markets.

A common solution being developed to the medium and heavy duty market is a composite sliding bearing based on a multilayer construction that comprises a steel backing, a lead free bearing layer, an intermediate layer or anti-diffusion layer and a lead free relatively soft overlay. Such bearing system is relatively close to the existing lead containing system and attempts to preserve some important functional properties of the bearings system, like the conformability and embedability given by the soft overlay with relatively preserved fatigue strength and the emergency running property of the bearing layer for the protection of the engine in the case that the overlay is completely worn out in operation.

This kind of sliding bearing is for example described in the U.K. patent application GB 2 321 468 A. This document discloses a composite sliding bearing with a copper-based bearing layer, an intermediate layer of copper-zinc, having 20 to 50 wt% of zinc, and tin-based overlay with a very wide variation of composition. Such tin-based overlay should have a 0.1 to 25 wt% of at least one element from the group consisting of Indium, Zinc, Copper, Antimony and Silver in order to improve the wear resistance. Yet, the silver-containing overlays show a maximum fatigue resistance of 40 MPa. Such unit load is considered as very low for medium to heavy duty engine applications.

The U.K. patent application GB 2 350 868 A presents a similar tin-silver overlay containing silver in the range of 2 to 10 wt%. No intermediate is disclosed. Further, no characteristic of the tin-silver overlay, especially no structure, is disclosed.

In summary, the state of the art does not offer any solutions to the three main problems to be solved with the use of lead free tin based overlays. The first problem is an intrinsic strengthening of the deposited tin-based overlay, with a hardness above approximately a minimum threshold of 20 HV (Vickers) in order to have a useful initial load carrying capacity. The second problem is the maintenance of adequate scuffing and fatigue properties of the operating overlay that is transformed upon thermal operation by the tin diffusion to the intermediate layer. Finally, the third problem is the control of the tin migration or diffusion from the overlay to the bearing layer that gives rise to embrittlement of the overlay and seriously jeopardizes the bearing load carrying capacity.

### Object of the invention

It is the object of the present invention to provide a lead free sliding bearing which exhibits a tin based overlay having a high initial load carrying capacity and a high fatigue resistance with an improved transformation over operating conditions into a high wear and seizure resistant layer able to fulfil the high loading carrying capacity of the medium to heavy duty engines without presenting the overlay embrittlement.

### Summary of the invention

The object of the present invention is achieved by a sliding bearing exhibiting an overlay which consists of a tin matrix and silver-tin intermetallic phases distributed in the tin matrix, wherein the silver-tin intermetallic phases are homogenously distributed in the tin-matrix and more of 50% of them having a particles size ≤ 1 µm.

### Brief Description of Drawings

Figure 1 shows a cross-section of a preferred embodiment of a sliding bearing according to the present invention with the overlay as plated.
Figure 2 shows a cross-section of a preferred embodiment of a sliding bearing according to the present invention with the overlay after operating.
Figure 3 to 5 show the cross-sections of sliding bearings of comparative examples.

### Detailed description of the invention

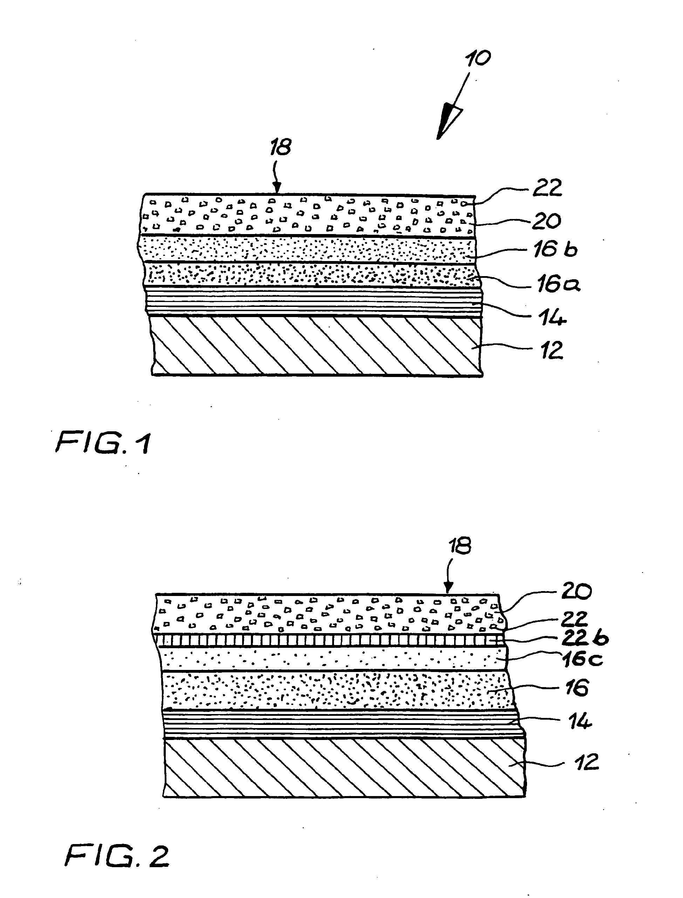

Figure 1 shows a cross-section of a preferred embodiment of a sliding bearing 10 according to the present invention. This preferred embodiment of the sliding bearing 10 comprises a back metal layer 12, preferably made of steel, a bearing layer 14 which is preferably copper-based, for example based on a copper-tin alloy or copper-tin-nickel alloy or copper-tin-bismuth alloy or copper-tin-bismuth-nickel alloy, having a copper content of at least 85 wt%, a first intermediate layer 16a comprising nickel and a second intermediate layer 16b comprising an alloy of nickel and tin and an overlay 18. In a second embodiment (shown in figure 2), instead of a first and second intermediate layer, there is a single intermediate layer 16 comprising nickel.

The overlay 18 of the present invention consists of tin and silver. The overlay 18 according to the invention presents a very specific microstructure, with a tin matrix and all of the silver presented in silver-tin intermetallic phases. In this embodiment, the silver-tin intermetallic phases 22 can be described as the ε-phase of a silver-tin binary phase with a compound description as Ag₃Sn and characterized by X-ray diffraction.

The microstructure of the silver-tin overlay according to the present invention performs a key and surprisingly functional behaviour under operation. The overlay 18 presents a hardness in the range of 20 to 35 HV. Such hardness level gives a very good conformability property with an excellent fatigue resistance to the overlay during the engine run-in condition, as well as for the approximately 100 to 250 hours of operation, depending on the oil film pressure and temperature. Such microstructure also hinders a massive plastic deformation of the tin matrix in areas where the contact with the journal may be stronger by possible assembling misalignments, due to the lower ductility and higher toughness of the overlay 18. After operating for 100 to 250 hours in the typical oil film pressures and temperatures, two diffusion phenomena take place. The first one, known by the prior art, is the diffusion of tin from the overlay 18 to the at least one intermediate layer, which may be a single nickel-layer 16 or a combination of a nickel layer 16a and a nickel-tin layer 16b. This first diffusion process gives rise to a reacting nickel-tin intermediate layer 16c (see figure 2). The second diffusion process gives rise to the nucleation and growth on the top of the at least one intermediate layer (i.e. the single layer 16 as shown in figure 2 or the nickel-tin layer 16b as shown in figure 1), of a thin continuous silver-tin layer 22b (see figure 2), which may be of the same ε-phase composition as it may be found in the silver-tin intermetallic phase formed in the overlay 18. This thin continuous silver-tin layer 22b enhances the bonding between the intermediate layer 16 and the overlay 18 and is therefore desirable. Therefore, an overlay 18 according to the present invention presents a multiple functional behaviour adapting itself to various demands. The microstructure fulfils the run-in process during the early stages of operation by supplying a high strength overlay that leads to sufficient conformability, without massive plastic deformation and a high fatigue resistance.

According to the invention the silver-tin intermetallic phases 22 are presented in a homogeneous distribution in the tin matrix, with more of 50% of the phases, preferably 99 % of the phases with a size lower than 1 micron. The fine distribution of the silver-tin intermetallic phases 22 enhances the hardness of the overlay 18. Furthermore, the ability of formation of the thin continuous silver-tin layer 22b, which may be of the same ε-phase composition as may be found in the silver-tin intermetallic phase formed in the overlay 18 is enhanced. It was surprisingly observed that the ability of formation of the continuous silver-tin layer, which preferably is a Ag₃Sn layer, during the bearing operation, depends on the size, distribution and content of the silver-tin intermetallic phases 22 in the overlay 18. The smaller the particles of the intermetallic phases 22, the better the formation of the continuous silver-tin layer 22b. Large particles of the intermetallic phases 22 will grow by consuming smaller particles of the intermetallic phases 22, impairing the silver diffusion to grow the silver-tin layer 22b formed on the top of the reacting nickel-tin intermediate layer 16c. If the undesirable larger particles of the silver-tin intermetallic phases 22 are formed during the deposition process, they will act as preferred nucleus for the growth of particles of silver-tin intermetallic phases in the middle of the overlay 18 in exchange of a desired formation of a continuous silver-tin layer 22b above the reacting nickel-tin intermediate layer 16c. Under such condition either a very thin discontinuous silver-tin layer 22b is formed or even no layer is formed. If the distribution of the intermetallic phases 22 is not even, there will be a lack of continuity of the thin silver-tin layer 22b above the reacting nickel-tin intermediate layer 16c.

Besides the size and the distribution of the intermetallic phases 22, their content in the tin-matrix 20, or alternatively saying, the silver content of the overlay 16 is of influence for the presence, the continuity and the thickness of the thin silver-tin layer 22b formed under operation on the top of the reacting nickel-tin intermediate layer 16c. Therefore, the preferred embodiment of the overlay 18 contains 6 wt% to 18 wt% silver. If the silver content is less than 6 wt%, the thin continuous silver-tin layer 22b is not formed, enabling a stronger tin diffusion from the overlay 18 to the intermediate layer 16. The observed tin diffusion under such circumstances may turn the whole diffusion process unstable with the complete transformation of the intermediate layer 16 into a reacting nickel-tin layer and possibility of formation of a brittle copper-tin intermetallic compound at the interface between the intermediate layer 16 and a copper-based bearing layer 14. If the silver content is higher than 18 wt%, the formation of a controlled fine distribution of intermetallic phases 22 with sizes smaller than 1 micron is decreased, leading to the consequence that under operation there is a formation of relatively high quantity of very large Ag₃Sn particles in the middle of the overlay 18 with no formation of a continuous thin silver-tin layer on the top of the reacting nickel-tin intermediate layer 16c.

In a preferred embodiment of the present invention, the silver-tin intermetallic phases 22 present an area fraction in a cross section from 8 to 30%, depending on the silver content.

The formation of a continuous silver-tin layer 22b on the top of the reacting nickel-tin intermediate layer 16c presents two surprisingly important further improvements of the functional behaviour to the bearing operation. The first function is to decrease the diffusion of tin to the intermediate layer 16 or the first intermediate layer 16a, respectively, hindering the formation of a brittle copper-tin intermetallic compound at the interface of a copper-based bearing layer 14. As it is known from the prior art, such embrittlement process leads to overlay spalling or to serious degradation of its fatigue resistance. With the formation of a continuous silver-tin layer 22b on the top of the reacting nickel-tin intermediate layer 16c, it was surprisingly observed a strong decrease of the tin migration to the intermediate layer 16 or the first intermediate layer 16a, respectively. The explanation for this desirable effect is that the silver-tin layer 22b becomes an efficient diffusion controlling barrier, as the supply of tin to the reacting nickel-tin intermediate layer 16c will depend on the disintegration of the intermetallic phases 22 and not anymore solely on the supply of tin to the front of the reacting nickel-tin intermediate layer 16c.

The second function of a continuous silver-tin layer 22b on the top of the reacting nickel-tin intermediate layer 16c is to become itself a hard high wear resistant sliding layer with improved scuffing and fatigue resistance after the worn out of the softer tin-silver overlay 18. Such surprisingly effect presented by this system and only observed with the availability of the defined as deposited microstructure is very important for the outstanding behaviour of the proposed solution.

With the progress of the operation of the bearing, there is a nucleation of the thin silver-tin layer on the top of the reacting nickel-tin intermediate layer 16c and its growth to a continuous layer 22b. Eventually, at the loaded areas of heavy duty applications there may happen a fatigue wear process of the overlay 18 with the exposure of the thin silver-tin layer 22b. Under such condition, the hard, highly seizure and fatigue resistant thin silver-tin layer gives an enduring full protection to the bearing operation.

Such functional layer presents higher seizure resistance than the reacting nickel-tin intermediate layer 16c that is below that thin silver-tin layer 22b. The preservation of the overlay 18 at the regions less loaded gives the continuous embedability and represents a protection against wear of the silver-tin layer 22b exposed at the loaded area.

For the deposition of an overlay according to the invention, preferably containing silver from 6 wt% to 15 wt%, it was adapted a commercial tin-silver bath supplied by the company Dr. Ing. Max Schlötter GmbH & Co. KG and described in German patent application DE 100 26 680 C1. Such bath is a cyanide free bath and it is an aqueous acid electrolyte comprising an alkylsulfonic acid or alkanolsulfonic acid, a soluble tin (II) salt, a soluble silver (I) salt and one or more organic sulfur compounds responsible for complexing the silver ions enabling a deposition of tin-silver alloy in the desired composition without having an undesirable tin (II) oxidation to tin (IV) and one ore more organic additives that are responsible for grain refining and leveling and a fine and homogeneous distribution of the silver-tin intermetallic phases in the tin-matrix.

Basically, there was an increase of the silver salt content and its corresponding complexant, as well as the adjustment of the grain refinement and leveling additive. However, the bath formulation alone could not give the desirable overlay 18. One can obtain a maximum silver content of 5 wt% at room temperature and regular bath agitation. The following deposition parameters were developed for having the bath formulation mentioned above giving the desirable overlay 18 with silver content preferably in the range of 6 wt% to 15 wt%. There is a need to have an adequate combination of current density, temperature and bath agitation to produce the correct tin-silver microstructure. Therefore, a current density of 1.0 to 2.5 A/dm², a temperature of 30°C to 50°C and a bath agitation from moderate to vigorous should be maintained.

One of the most important influences and the more difficult to describe is the level of agitation. The assigned moderate or moderate to vigorous bath agitation cannot be obtained by a conventional bath circulation and filtering system, even if the bath is renovated more than 2 to 3 times per hour, that is the conventional upper threshold of bath circulation. The agitation should be obtained either by an external mechanical stirrer immersed in the bath or aspersing tubes immersed in the bath or a mechanical agitation of the holder.

Giving a certain level of current density in the defined range, the agitation system should be adjusted through either rotation of the stirrer or oscillation of the holder or flow and/or pressure of aspersing tubes to lead to the desirable silver content and microstructure.

The lower the current density, the higher will be the silver content and the more sensitive to the agitation will be the bath, i.e. slightly stronger agitation could lead to undesirable microstructure. On the contrary, the higher the current density, the lower will be the silver content in the overlay and the stronger should be the agitation. With a stronger agitation, there is a risk of occlusion of sludge and it is more difficult to keep the homogeneity along the fixture, from the part at the top to the part at the bottom.

Therefore, it is preferred to operate with a current density of 1.2 to 1.8 A/dm² and the weaker possible agitation on a designed system.

The temperature of deposition is important to lead to a desirable microstructure. Lower than 30°C will lead to a lower content of silver and as a consequence to a small content of intermetallic phases 22, decreasing the initial fatigue properties of the overlay. A temperature higher than 50°C will lead to substantial amount of large intermetallic phase 22, especially larger than 1 micron, and impairing the formation of an adequate continuous thin silver layer under bearing operation.

Now an example according to the invention with reference to figure 1 together with comparative examples 1 to 3 with reference to figures 2 to 4 will be described.

### Example 1 according to the invention:

### Bath composition:

### (all mentioned additives are products of the Schlötter GmbH & Co KG, Germany)

150 g/l methane sulfonic acid
20 g/l tin (II)
2 g/l silver (I)
120 ml/l additive Slotoloy SNA33 (complexing agent for silver)
100 ml/l additive VP 11-661 (improved grain refiner and levelling agent)

### Plating parameters:

Temperature 40°C
Current density 1,6 A/dm²
Moderate agitation realized with special aspersing tubes immersed in the bath

### Result:

A smooth half bright overlay with 12 wt% silver, remaining Sn with the microstructure shown in figure 1 is achieved.

### Comparative example 1:

### Bath composition:

150 g/l methane suflonic acid
20 g/l tin (II)
2 g/l silver (I)
120 ml/l additive Slotoloy SNA33 (complexing agent for silver)
40 ml/l additive Slotoloy SNA34
5 ml/l additive Slotoloy SNA32

### Plating parameters:

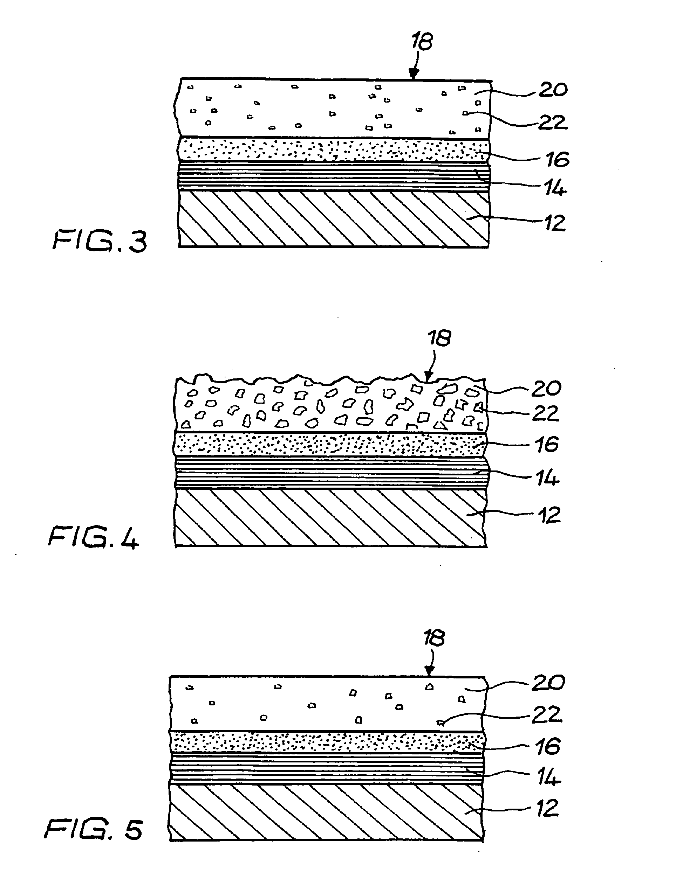

Temperature 40°C
Current density 2 A/dm²
Regular agitation with conventional bath circulation
Result: half bright overlay with 9 wt% Ag, remaining Sn, not smooth, with the microstructure shown in figure 3: irregular distribution of intermetallic phases Ag₃Sn.

### Comparative example 2:

### Bath composition:

150 g/l methane sulfonic acid
20 g/l tin (II)
2 g/l silver (I)
120 ml/l additive Slotoloy SNA33 (complexing agent for silver)
80 ml/l additive VP 11-661

### Plating parameters:

Temperature 55°C
Current density 0,8 A/dm²
Moderate to vigorous agitation realized with special aspersing tubes immersed in the bath
Result: rough dark overlay with 22 wt% Ag, remaining Sn, with the microstructure shown in figure 4: high content of coarse intermetallic phases Ag₃Sn.

### Comparative example 3:

### Bath composition:

150 g/l methane sulfonic acid
20 g/l tin(II)
2 g/l silver (I)
120 ml/l additive Slotoloy SNA33 (complexing agent for silver)
100 ml/l additive VP 11-661 (improved additive)

### Plating parameters:

Temperature 25°C
Current density 2 A/dm²
Regular agitation with conventional bath circulation
Result: smooth half bright overlay with 2 wt% Ag, remaining Sn, with the microstructure shown in figure 5: low content of intermetallic phases Ag₃Sn, irregular distributed

## Claims

1. Sliding bearing (10) comprising a back metal layer (12), a bearing layer (14) applied to the back metal layer (12), at least one intermediate layer (16) applied to the bearing layer (14) and an overlay (18) applied to the at least one intermediate layer (16), **characterized in that** the overlay consists of a tin matrix (20) and silver-tin intermetallic phases (22) distributed in the tin matrix, wherein silver-tin intermetallic phases (22) are distributed homogeneously in the tin matrix (20) and wherein silver-tin intermetallic phases (22) consist of particles, more of 50% of them having a particle size ≤ 1 micron.

2. Sliding bearing (10) according to claim 1, **characterized in that** more than 99% of the silver-tin intermetallic phases (22) consist of particles having a particle size ≤ 1 micron.

3. Sliding bearing according to any of claims or 2, **characterized in that** the silver-tin intermetallic phase (22) contains the ε-phase of a silver-tin binary phase of the compound Ag₃Sn.

4. Sliding bearing according to any of claims 1 or 3, **characterized in that** the silver-tin intermetallic phase (22) presents an area fraction in a cross section from 8 % - 30 %.

5. Sliding bearing according to any of claims 1 to 4, **characterized in that** the overlay (18) contains 6 wt%-18 wt% of silver.

6. Sliding bearing according to any of claims 1 to 5, **characterized in that** the at least one intermediate layer (16) to which the overlay (18) is applied is a pure nickel layer.

7. Sliding bearing according to any of claims 1 to 5, **characterized in that** the at least one intermediate layer (16) to which the overlay (18) is applied consists of a pure nickel layer (16a) applied on the bearing layer (14) and a nickel-tin layer (16b) applied on the pure nickel layer (16a).

8. Sliding bearing according to any of claims 1 to 7, **characterized in that** the bearing layer (14) is a copper-based bearing layer.

9. Sliding bearing according to claim 8, **characterized in that** the bearing layer (14) has a copper content of at least 85 wt%.

10. Sliding bearing according to any of claims 8 or 9 **characterized in that** the bear ing layer (14) further contains tin and/or nickel and/or bismuth.

## Patentansprüche

1. Gleltlager (10), das aus einer Rückmetallschicht (12), eine Lagerschicht (14), die auf der Rückmetallschicht (12) aufgebracht ist, mindestens einer Zwischenschicht (16), die auf der Lagerschicht (14) aufgebracht ist, und einer Deckschicht (18), die auf der mindestens einen Zwischenschicht (16) aufgebracht ist, besteht, **dadurch gekennzeichnet, dass** die Deckschicht aus einer Zinnmatrix (20) und intermetallischen, in der Zinnmatrix verteilten Silber-Zinn-Phasen (22) besteht, wobei intermetallische Silber-Zinn-Phasen (22) homogen in der Zinnmatrix (20) verteilt sind und intermetallische Silber-Zinn-Phasen (22) aus Partikeln bestehen, von denen mehr als 50 % eine Partikelgröße von ≤ 1 Mikrometer aufweisen.

2. Gleitlager (10) nach Anspruch 1, **dadurch gekennzeichnet, dass** mehr als 99 % der intermetallischen Silber-Zinn-Phasen (22) aus Partikeln mit einer Partikelgröße von ≤ 1 Mikrometer bestehen.

3. Gleitlager nach einem von Anspruch 1 oder 2, **dadurch gekennzeichnet, dass** die intermetallische Silber-Zinn-Phase (22) die ε-Phase einer binären Silber-Zinn-Phase der Verbindung Ag₃Sn enthält.

4. Gleitlager nach einem von Anspruch 1 oder 3, **dadurch gekennzeichnet, dass** die intermetallische Silber-Zinn-Phase (22) in einem Querschnitt einen Flächenanteil von 8 % - 30 % aufweist.

5. Gleitlager nach einem von Anspruch 1 bis 4, **dadurch gekennzeichnet, dass** die Deckschicht (18) 6 Gew.-% bis 18 Gew.% Silber enthält.

6. Gleitlager nach einem von Anspruch 1 bis 5, **dadurch gekennzeichnet, dass** die mindestens eine Zwischenschicht (16), auf der die Deckschicht (18) aufgebracht ist, eine Relnnickelschicht ist.

7. Gleitlager nach einem von Anspruch 1 bis 5, **dadurch gekennzeichnet, dass** die mindestens eine Zwischenschicht (16), auf der die Deckschicht (18) aufgebracht ist, aus einer Reinnickelschicht (16a), die auf der Lagerschicht (14) aufgebracht ist, und einer Nickel-Zinn-Schicht (16b), die auf der Reinnickelschicht (16a) aufgebracht ist, besteht.

8. Gleitlager nach einem von Anspruch 1 bis 7, **dadurch gekennzeichnet, dass** die Lagerschicht (14) eine kupferbasierte Lagerschicht ist.

9. Gleitlager nach Anspruch 8, **dadurch gekennzeichnet, dass** die Lagerschicht (14) einen Kupfergehalt von mindestens 85 Gew.-% aufweist.

10. Gleitlager nach einem von Anspruch 8 oder 9, **dadurch gekennzeichnet, dass** die Lagerschicht (14) ferner Zinn und/oder Nickel und/oder Bismut enthält.

## Revendications

1. Palier coulissant (10) comprenant une couche métallique postérieure (12), une couche de support (14) appliquée à la couche métallique postérieure (12), au moins une couche intermédiaire (16) appliquée à la couche de support (14) et un revêtement (18) appliqué à la ou aux couche(s) intermédiaires) (16), **caractérisé en ce que** le revêtement se compose d'une matrice d'étain (20) et de phases intermétalliques d'argent/d'étain (22) distribuées dans la matrice d'étain, les phases intermétalliques d'argent/d'étain (22) étant distribuées de façon homogène dans la matrice d'étain (20) et les phases intermétalliques d'argent/d'étain (22) se composant de particules dont plus de 50 % de ces dernières ont une taille particulaire ≤ 1 micron.

2. Palier coulissant (10) selon l'exigence 1, **caractérisé en ce que** plus de 99 % des phases des phases intermétalliques d'argent/d'étain (22) se composent de particules ayant une taille particulaire ≤ 1 micron.

3. Palier coulissant selon l'exigence 1 ou 2, **caractérisé en ce que** la phase intermétallique d'argent/d'étain (22) contient la phase ε d'une phase binaire d'argent-d'étain du composé Ag₃Sn.

4. Palier coulissant selon l'exigence 1 ou 3, **caractérisé en ce que** la phase intermétallique d'argent/d'étain (22) présente une fraction surfacique en coupe transversale comprise entre 8 % et 30 %.

5. Palier coulissant selon l'une des exigences 1 à 4, **caractérisé en ce que** le revêtement (18) contient de 6 % en poids à 18 % en poids d'argent.

6. Palier coulissant selon l'une des exigences 1 à 5, **caractérisé en ce que** la ou les couches intermédiaires (16) sur lesquelles est appliqué le revêtement (18), sont une couche de nickel pur.

7. Palier coulissant selon l'une des exigences 1 à 5, **caractérisé en ce que** la ou les couches intermédiaires (16) sur lesquelles est appliqué le revêtement (18), se composent d'une couche de nickel pur (16a) appliquée sur le palier coulissant (14) et d'une couche de nickel-d'étain (16b) appliquée sur la couche de nickel pur (16a).

8. Palier coulissant selon l'une des exigences 1 à 7, **caractérisé en ce que** la couche de support (14) est une couche de support à base de cuivre.

9. Palier coulissant selon l'exigence 8, **caractérisé en ce que** la couche de support (14) a une teneur en cuivre d'au moins 85 % en poids.

10. Palier coulissant selon l'une des exigences 8 ou 9, **caractérisé en ce que** la couche de support (14) contient en outre de l'étain et/ou du nickel et/ou du bismuth.
